# EUROPEAN PATENT APPLICATION

(11) **EP 2 019 358 A1**
(43) Date of publication of application: **28.01.2009**
(21) Application number: 07014574.3
(22) Date of filing: 25.07.2007
(51) Int. Cl.: G06F 9/455, H04L 29/08, G06F 9/50

(54) **A method and a system for the creation and deployment of a virtual machine appliance on virtualised servers**

(71) Applicant: Deutsche Telekom AG, 53113 Bonn (DE); Technische Universität Berlin, 10623 Berlin (DE)
(72) Inventor: Evangelos Kotsonvinos Dr., 10407 Berlin (DE)
(74) Representative: Kampfenkel, Klaus

(57) **Abstract**

A method and a system is provided for creating, centrally managing, centrally storing and deploying VM appliances on a multitude of servers (120₁ to 120ₙ) in a data center system (5). VM appliances are pre-configured instances of operating systems with pre-installed applications, which are tested and validated. The system (5) includes a VM appliance creator component (20), which runs on a validation server (10) and captures the configuration of a running and tested VM that is to be turned into an appliance. It also comprises a management portal (50) which centrally handles the naming, storage, retrieval, and customization of VM appliance descriptors (110). The system (5) further includes storage systems (60, 65), which centrally store the file systems and O/S kernels used by the VM appliances. It provides further a management daemon (122), running on the managed servers (120₁ to 120ₙ) of the data center system (5), which allows deploying and starting VM appliances on the VMMs of the managed servers on demand, through the management portal.

## Description

### Field of the Invention

The present invention pertains to a method and a data center system for providing virtual machine appliance for at least one virtualized server device of a data center system to boot a virtual machine thereon. In particular, the invention is directed to a method and a system for the creation of virtual machine appliances on a server device and for the deployment of the virtual machine appliances on virtualized servers of the data center system.

### Background of the Invention

One of the main challenges for modern data centers is increasing the speed and reducing the complexity of *provisioning*, in other words setting up new operating system and application environments on data center servers to serve customer requirements.

Modern data centers comprise large numbers of interconnected servers, which run different applications and operating systems on behalf of internal or external customers. One of the main challenges for data centers is related to quickly and effortlessly *provisioning* servers. A significant part of the provisioning effort required when a new customer arrives to the data center is due to the labour-intensive nature of setting up the operating system and applications required on each server.

Virtualisation is of growing importance in the world of IT deployments, in particular in the fields of data centers and wide-area server infrastructures.

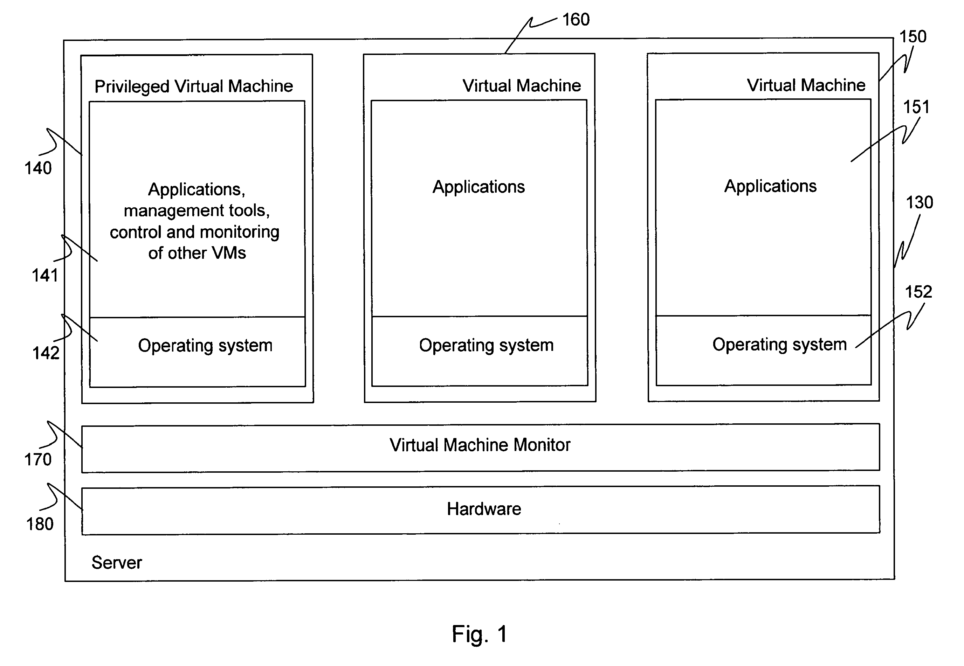

Virtualisation is a technology widely used in modern data centers. It is based on a virtual machine monitor (VMM) software component, which runs on the server hardware and virtualizes physical resources. It allows running multiple operating systems and their applications on the same physical server, on top of the virtual machine monitor. Each operating system and its applications are said to be running within a virtual machine (VM). For exposition, the structure of a virtualized server 130 is shown in Fig. 1. The server 130 supports a privileged virtual machine 140 within which applications 141, for example management tools for controlling and monitoring other virtual machines 150, 160 and an operating system 142, e. g. Linux, are running. In Fig. 1 two unprivileged virtual machines 150 and 160 are shown, each comprising applications 151 and a respective operating system, e.g. BSD and Windows, respectively. A virtual machine monitor 170, e.g. Xen or VMWare is used to run the virtual machines 150 and 160. The applications and operating systems can be stored on a local memory depicted by a hardware block 180.

In a data center system virtualization allows the consolidation of services in such a way as to provide the control and protection facilities normally associated with dedicated separate hardware and software environments without higher costs. As an example, it may be wise to separate the publicly visible web server of a company from the internal intranet server hosting potentially valuable material. For security reasons these would often be deployed on separate physical machines to provide the appropriate protection environment however neither will use the full capacity of resources provided by the physical hardware. These two separate physical machines could be replaced by a single server running virtualization software such as Xen or VMWare in order to provide a protection mechanism to effectively and securely separate the two services within their own virtual machines.

The sharing of a single physical host is also helpful in reducing the cost of deploying services. This is the case both in terms of the saving the initial cost of deployment by reducing the costs of hardware investment but also in the longer term by reducing the costs of hardware maintenance.

By removing the tight coupling between the physical machine and the services that are running on it through the use of virtualization it paves the way to allowing the movement of live services, enveloped within a virtual machine, from one physical host to another, without severely disrupting them. This has a number of direct applications. In the local-area it can be used to maintain a high uptime for a service by allowing it to be migrated to a different physical machine if the original host must be taken down for maintenance. Similarly this can also be used to allow for the transparent upgrade of the physical host this also exploits the fact that virtualization also abstracts away the physical hardware and provides virtual devices. Furthermore, it can be used for load balancing, allowing Virtual Machines to be moved from more to less busy servers.

US 2005/0125513A1 discloses a cache-based system management architecture with virtual appliances, network repositories, and virtual appliance transceivers. This document describes a system for deploying and managing software on a multitude of globally distributed networked desktop computers. This is done by separating the system state, which is called a virtual appliance, from user data and transferring the system state to the computers independently of user data using a portable storage device. This effectively leads to a highly decentralized management solution, whereby virtual appliances are selected and installed on each desktop computer independently by the local computer administrator.

WO 03/088002A2.describes managing multiple virtual machines. This document relates to managing virtual machines on one or more mainframe computers. It uses the concept of templates, which describe aspects of virtual machines, including the resources and software that is to be made available to them upon start-up. Software described in a template is automatically installed into the virtual machine when it is being started, from a number of file servers that the system uses to provide the data and software that the virtual machines need.

US 2005/120160 discloses a method and system for managing virtual servers. The known system is based on a distributed Virtual Machine Monitor (VMM) - a VMM that unifies distributed resources of multiple servers and exports them to the applications as a single supercomputer.

US 2006/0218544A1 describes a mechanism to store information describing a virtual machine in a virtual disk image. The known mechanism enables expanding the virtual hard disk (VHD) image file format of Microsoft to store information such as descriptions of file content, compatibility with host operating systems, and Digital Rights Management information.

Evangelos Kotsovinos et al. describe in the paper "Global-scale service deployment in the XenoServer platform", In Proceedings of the First Workshop on Real, Large Distributed Systems (WORLDS '04), a system for rapidly deploying virtual machines. The system uses Copy-on-Write (CoW) to allow the separation of an immutable template file system, which is persistently cached on the managed servers, from the mutable user data, which is stored remotely in a central storage system.

It is an object of the present invention to provide a method and a system which enable to reduce the time needed to provision a server and improveg system robustness and reliability[MSOffice1].

### Summary of the Invention

It is a core aspect of the invention to present an effective solution for *rapid provisioning* of data center servers based on virtual machine appliances. In particular, a method and a system are provided that support creating, centrally storing and managing, and deploying virtual machine appliances on data center servers. A virtual machine appliance includes pre-installed and pre-configured software and may also include predefined configuration parameters, ready to be deployed and run on selected data center servers on top of a virtual machine monitor. It is to be noted the virtual machine monitor is not included in a virtual machine appliance, but locally installed on each data center server on which the virtual machine appliance is to be deployed. The use of pre-installed and predefined software, i.e. a virtual machine appliance reduces the time needed to provision a new server and improves robustness and reliability as a virtual machine, i.e. its software installations and configurations are tested before the virtual machine appliance is created. This may be used to guarantee that a virtual machine appliance is only created if the respective virtual machine runs properly. Therefore, it can be ensured that the virtual machine if restarted on a selected virtualized server device runs properly.

Virtual machine appliances can be stored in a central or distributed storage system such as HDFS (see http://lucene.apache.org/hadoop/hdfs design.html) and given unique identifiers, called pointers. They can be deployed on data center servers on demand, in a short time, and through a convenient interface, for example a web-based interface.

The method and system may enable a) automatically converting configured, tested, and validated virtual machines to virtual machine appliances that can be later deployed on servers, b) the centralized storage and management of virtual machine appliances through a convenient interface, and c) the discovery of virtual machine appliances and their deployment onto one or more data centre servers.

Centralized management of virtual machine appliances leads to better system consistency and robustness. The invention allows all appliances to be managed and installed on data center servers through a central management portal of data center server device, without requiring physical access to the servers to plug in portable storage devices. This is particularly important in data centers, where large numbers of remote servers need to be managed.

The management portal handles for example the naming, storage, retrieval, and customization of VM appliance descriptors. These are structured objects that describe the structure, functionality, compatibility, and requirements of the different VM appliances, and allow users and administrators to view and search through this information.

In a preferred embodiment the data center uses commodity x86 servers, such as servers with Intel and AMD CPUs. In particular, the data center system enables the management of virtual machines running commodity Operating Systems such as Linux and Windows. Also, the system manages virtual machine monitors that run on x86 servers, such as VMWare and Xen.

The data center system may include a VM appliance creator component, which runs on a validation server and captures the configuration of a running and tested VM that is to be turned into an appliance.

The data center system provides a management daemon, running on the managed servers of the data center system, which allows deploying and starting VM appliances on the VMMs of the managed servers on demand, through the management portal.

The above mentioned problem is solved by a method for providing virtual machine appliances for at least one virtualized server device to boot a virtual machine thereon. The method comprises the steps of:
a) storing on a first server device at least one configuration set, each comprising a plurality of configuration modules and, if available configuration parameters, which define at least partially the configuration of a virtual machine;
b) selecting a virtual machine running on the first server device intended to be converted into a virtual machine appliance so that it can be restarted on a selectable virtualized server device;
c) retrieving from the stored configuration set associated with the selected virtual machine at least some configuration modules needed to restart the selected virtual machine on a selectable virtualized server device, the retrieved configuration modules defining a virtual machine appliance;
d) transferring the retrieved configuration modules to a storage means;
e) storing the retrieved configuration modules in the storage means;
f) transferring location addresses from the storage means to a second server device, wherein the location addresses indicate the locations where the retrieved configuration modules are stored; and
g) generating pointers in response to the location addresses and storing them on the second server such that the configuration modules can be identified and downloaded to a virtualized server device on demand.

It should be noted that pointers are stored on the second server device instead of the complete configuration modules to reduce the amount of storage on the second server device and to reduce the data rate needed to transfer the pointers to a virtualized server device.

In particular, pointers which are associated with a certain virtual machine appliance are defined in a so called virtual machine descriptor. In a preferred embodiment the descriptor is stored in a local database of the second server device, and points to a virtual machine appliance stored on the storage means.

In the following description the first server device is also termed as an "appliance validation server", the second server is termed as a "management server" which is the central management instance of the data center system.

The term "server device" emphasizes that the server is a hardware component. The term "virtualized server device" refers to a server device having installed a local virtual machine monitor (VMM) to run virtual machines.

In a preferred embodiment the storage means is a central storage system or a distributed storage system. The storage system centrally stores virtual machine appliances which can be downloaded to a virtualized server device on demand to start or boot a virtual machine thereon.

In order to restart a virtual machine on a virtualized server device properly the required configuration modules including a root file system, a configuration file and an operating system kernel are transferred from the storage means to a selected virtualized server device.

In a preferred embodiment, step b) comprises the steps of starting, testing and validating the selected virtual machine. During this step the virtual machine and the installed applications within the file systems it uses are tested. If the virtual machine and the applications run properly, the configuration modules, in particular the root file system, the configuration file system and the operating system kernel are retrieved from the configuration set and stored locally on the first server. As a result of testing the virtual machine appliance, the system robustness and reliability are enhanced.

Furthermore, the configuration parameters of each configuration set may comprise a parameter of the amount of memory provided to the selected virtual machine, a parameter of the number of processors that the selected virtual machine is allowed to use, parameters of the minimum and/or maximum disk space of a virtualized server device on which the virtual machine is to be deployed. In addition, the configuration parameters of each virtual machine which is available on the first server device include initial resource allocation parameters and/or initial network configuration parameters. All parameters may be altered automatically and/or manually to improve the system configuration, performance, robustness and reliability.

In a preferred embodiment step c) comprises the step of retrieving at least some of the configuration parameters, transferring the retrieved configuration parameters to the second server device and storing them on the second server device. In this case the pointers are created at the first server device, wherein each pointer represents a respective configuration module of the retrieved configuration modules of the configuration set. The pointers are then transferred to the second server device (50). Step g) comprises the step of updating the pointers in response to the location addresses received from the storage means and storing the updated pointers on the second server. The pointers and the configuration parameter are defined by a descriptor object which is stored in a local database of the second server device. Each descriptor object represents a virtual machine appliance, and points to the configuration modules stored on the storage means.
Alternatively, step c) comprises the step of retrieving at least some of the configuration parameters;
step d) comprises the step of transferring the retrieved configuration modules and the configuration parameters to the second server device and the retrieved configuration parameters to the storage means;
step f) comprises the step of transferring location addresses indicating the locations where the retrieved configuration parameters are stored from the storage means to the second server device, and
step g) comprises the step of generating pointers in response to the location addresses and storing them on the second server such that the configuration modules of the virtual machine retrieved from the configuration set can be identified and downloaded to a virtualized server device on demand.

The configuration modules to be sent to the second server device have to first be stored as images, such as ISO images, on the first server device. Therefore, if necessary, the retrieved configuration modules are converted into images which are transferred via the second server device to the storage means. This may be, for instance, ISO 9660 file system images.

In a preferred embodiment the pointers to the locations of the configuration modules are created at the first server[MSOfice2] device, wherein each pointer represents a respective configuration module of the retrieved configuration modules and/or the configuration parameters of the configuration set. The pointers associated with a virtual machine appliance are transferred to the second server device, and
- step g) comprises the step of updating the pointers in response to the location addresses received from the storage means and storing the updated pointers on the second server.

To create a virtual machine appliance for each virtual machine available on the first server device steps b) to g) are repeated.

In order to boot a new virtual machine using a virtual machine appliance on a virtualized server device a connection is established between a user's device and the second server device. It is to be noted that the user' device may be the first server device. The connection may be an IP-channel via the Internet. Next, a list of all available virtual machine appliances stored on the storage means is provided to the user's device. This list which is stored for example on the second server device is transferred to and shown on the user's device. The user selects an available virtual machine appliance and a virtualized server device on which the selected virtual machine appliance is to be deployed. To allow only authorized users access to the storage means a ticket associated with the selected virtual machine appliance is generated, for example by the second server device. The ticket is transferred to the selected virtualized server device and to the storage means. For example, the ticket is transferred via encrypted IP-connections using the Internet. Next, the descriptor object associated with the selected virtual machine appliance is transmitted from the second server device to the selected virtualized server device. The descriptor object and the ticket are then transmitted from the selected virtualized server device to the storage means. In response to the descriptor object and the ticket the storage means transmits the configuration modules and, if available, the configuration parameters, which define the selected virtual machine appliance to the selected virtualized server device. By deploying the selected virtual machine appliance on the selected virtualized server device the respective virtual machine is booted and now ready for use by the user. The configuration parameters of the selected virtual machine appliance are received from the storage device or the second server device.

It is to be noted that in a preferred embodiment the configuration parameters retrieved from the configuration set are stored on the second server device such that they are indexed and searchable. Only the configuration modules such as the file system images and the operating system kernel which comprise a large amount of data are store in the storage means. The configuration parameters are then provided by the second server device to the selected virtualized server device.

To keep the second server device informed of the requested booting process an acknowledgement message is transferred from the selected virtualized server device to the second server device, in particular when the virtual machine has been booted successfully.

In a preferred embodiment, the ticket can be deleted from the second server device in response to a positive acknowledgement. In addition, an acknowledge message can be sent to the user's device informing the user that the requested virtual machine has been booted properly and is now ready to be used.

The technical problem is further solved by a data center system for providing virtual machine appliances for at least one virtualized server device to boot a virtual machine thereon, The data center system comprises a first server device which is adapted to run a virtual machine and to execute applications within the virtual machine by using a virtual machine monitor. The first server device comprises storage means for storing at least one configuration set, each comprising a plurality of configuration modules and, if available configuration parameters which define at least partially the configuration of a virtual machine. In addition the first server device comprises means for retrieving from the stored configuration set at least some configuration modules and, if available, at least one configuration parameter needed to start or re-start the respective virtual machine. The retrieved configuration modules and the retrieved at least one configuration parameter define a so-called virtual machine appliance.
The data center system further comprises a storage device for storing the retrieved configuration modules. In addition, the system includes a second server device, which comprises first storage means for storing pointers pointing to the locations where the retrieved configuration modules, are stored on the storage device. The second server device is adapted to transfer the configuration modules received from the first server device to the storage device. The at least one configuration parameter is stored on the storage device or on the second server device.

The configuration parameters can be stored on the second server device within a virtual machine appliance descriptor, so that they are indexed and searchable.

In dependence of the system configuration the storage means of the second server device stores pointers pointing to the locations where the at least one configuration parameter is stored on the storage device, wherein the second device is adapted to transfer the at least one configuration parameter received from the first server device (10) to the storage device.

To improve the flexibility and scalability of the data center system the storage device is a central storage system or a distributed storage system. The storage system is adapted to communicate with the second server device to receive the configuration modules and the at least one configuration parameter and to send their location addresses to the second server device.

To deploy selected virtual machine appliances on selectable data center server devices the data center system according further comprises at least one virtualized server device on which a selected virtual machine appliance is to be deployed. Each virtualized server device runs a local virtual machine monitor. It further comprises software that is able to start a virtual machine by using a selected virtual machine appliance.

A user's device is provided which is adapted to establish a connection to the second server device in response to a user's request. The user's device includes input means for selecting a virtual machine appliance and at least the one virtualized server device on which the selected virtual machine appliance is to be deployed. The second server device includes second storage means for storing a list of all available virtual machine appliances stored on the storage device. It further comprises generating means for generating a ticket in response to a virtual machine appliance selected by the user, means for transferring the list to the user's device, the ticket to the selected virtualized server device and to the storage device as well as a descriptor object associated with the selected virtual machine appliance to the selected virtualized server device via established connections. The descriptor object includes the pointers pointing to the configuration modules and to the at least one configuration parameter, if the parameter is stored on the storage means, whereas the descriptor object includes the configuration parameter directly if it is stored on the second server device. The selected virtualized server device, in turn, is adapted to transfer the pointers and the ticket to the storage device. The storage device comprises means for comparing the tickets received from the second server device and the virtualized server device and means for sending the configuration modules and, if available, the at least one configuration parameter which define the selected virtual machine appliance to the selected virtualized server device, in response to the pointers and the tickets. The selected virtualized server device is adapted to boot the respective virtual machine by using the configuration modules and, if available, the at least one configuration parameter defined by the selected virtual machine appliance descriptor object received from the storage device or the second server device.

In a preferred embodiment the ticket is a random number which is deleted by the second sever device after the virtual machine has been booted successfully on the selected virtualized server device. The ticket is for example a large random number.

The second server device (50) may further include means for searching through the available virtual machine appliances using predetermined identifiers and/or parameters and means for categorizing virtual machine appliances.

The invention addresses one of the main challenges for modern data centers, which is related to increasing the speed and reducing the complexity of *provisioning* - in other words setting up new operating system and application environments on data centre servers to serve customer requirements.

### Brief Description of the Drawings

The invention, together with its objects and the advantages thereof, may be best understood by reference to the following description taken in conjunction with the accompanying drawings, in which:
- Fig. 1: shows a schematic block diagram of a virtualized server,
- Fig. 2: shows a data center system according to the invention for creation of a virtual machine appliance,
- Fig. 3: shows a schematic block diagram of the appliance validation server of Fig. 2 used for discovery configuration modules and parameters needed to run a virtual machine,
- Fig. 4: shows the format of a virtual machine appliance descriptor object stored in the management server of the data center system of Fig. 2, and
- Fig. 5: shows the data center system of Fig. 2 extended by virtualized servers which are adapted to deploy virtual machine appliances.

### Detailed Description of the Invention

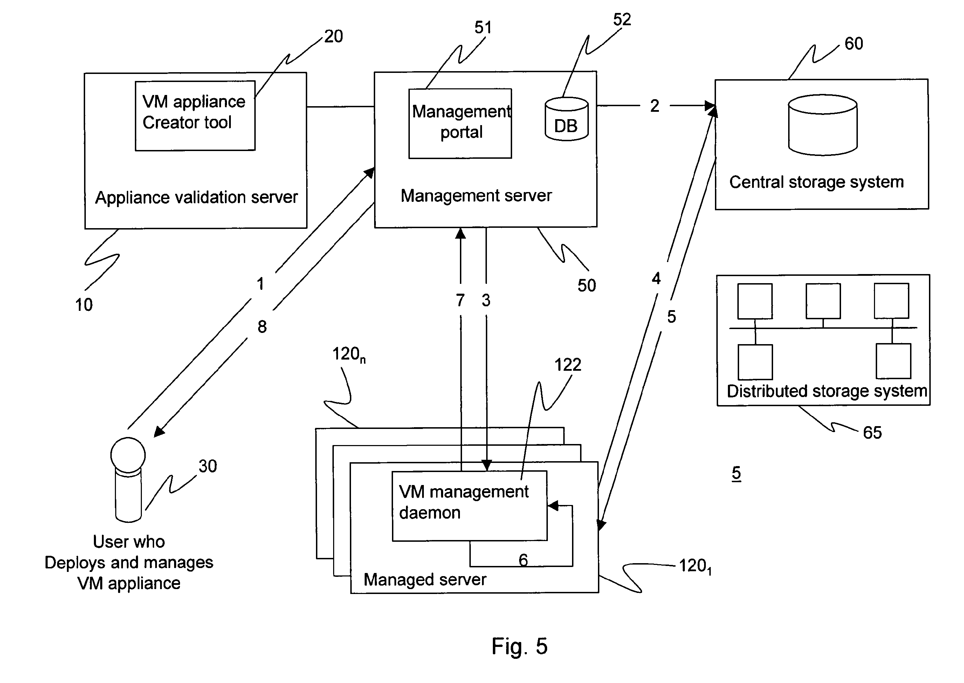

Fig. 5 shows an exemplary data center system 5 which supports a) creation of virtual machine appliances, herein also referred to as VM appliances, by an appliance validation server 10, b) centralized management of the VM appliances by a management server 50, c) centralized storage of the VM appliances in a central storage system 60 or a distributed storage system 65 as well as d) deployment of VM appliances on managed virtualized servers 120₁ to 120ₙ.

The appliance validation server 10 is used by an administrator who wishes to create a VM appliance. Furthermore, the appliance validation server 10 helps the administrator to test a selected virtual machine and to validate and ensure that the virtual machine is running properly. The administrator then uses a VM appliance creator software 20, which runs on the appliance validation server 10, to turn the tested and validated virtual machine into a VM appliance.

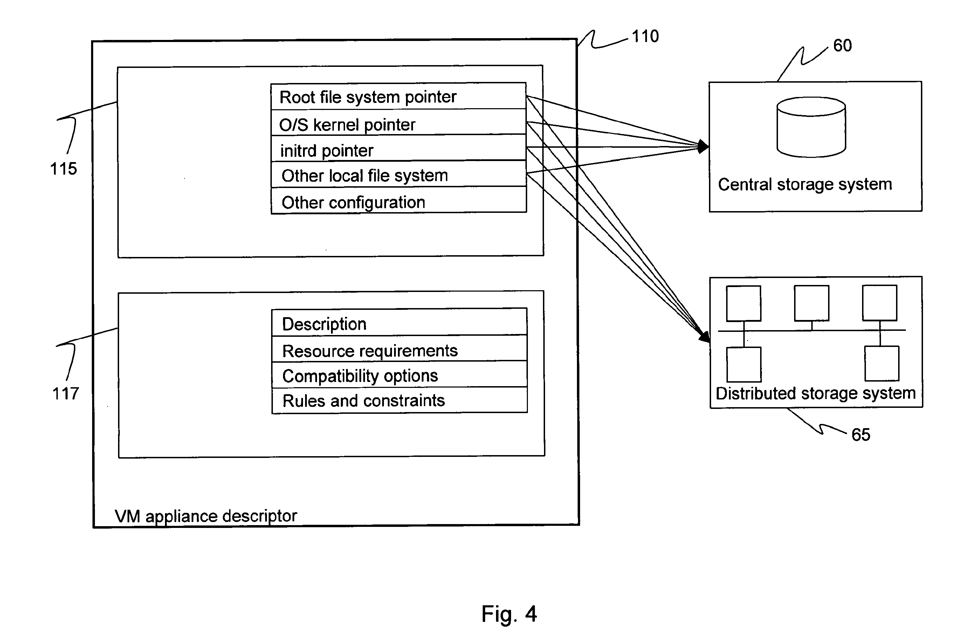

The management server 50 is running management portal software 51, which handles information about all VM appliances available in the data center system 5. In particular, the management portal software 51 provides a central management point for adding, browsing through, deploying and managing VM appliances. Furthermore, it includes a database 52 that stores VM appliance descriptors in an indexed, searchable manner which is described below. An exemplary VM appliance descriptor is shown in Fig. 4. The management server 50 may be connected via an Internet connection to the appliance validation server 10 to receive VM appliances.

The larger configuration modules of the VM appliances, e.g. file system images, operating system and initrd images themselves are stored in the central storage system 60, such as network-attached storage, or the distributed storage system 65, such as an open-source file system HDFS. The management server 50 is connected to the central storage system 60 or the distributed storage system 65, for example via an established Internet connection. Distributed storage systems are very cost-efficient, as storage is provided by a multitude of commodity hard disks on commodity servers, instead of expensive proprietary storage servers. Furthermore, such storage systems 65 exhibit very high levels of scalability, fault resilience, and performance, particularly for sequential accesses and mainly reads of large files. Therefore, the storage systems 60 and 65 are very suitable exchanging data via the data center system 5 since VM appliances which comprise large file systems and operating system kernels need to be read sequentially.

Each of the managed servers 120₁ to 120ₙ is virtualized, i.e. runs a virtual machine monitor and presents a structure similar to the one shown in Fig. 1. The servers 120₁ 120ₙ are termed "managed servers" because they are managed centrally by the management portal 51 of the management server 50. A program called *VM management daemon* 122 runs on each server 120₁ to 120ₙ to handle the deployment of and request for VM appliances. VM appliances are deployed and used to run virtual machines (VMs) on these servers. The managed servers 120₁ to 120ₙ can be connected, for example via the Internet, to the management server 50 and to the storage system 60 or 65 to exchange data as explained below. In addition, a user's server 30 is connected to the management server 50 for requesting a VM appliance to be deployed thereon.

Now, the operation of the data center system 5 is described in detail.

### Step 1: Start and fine-tune of a candidate VM

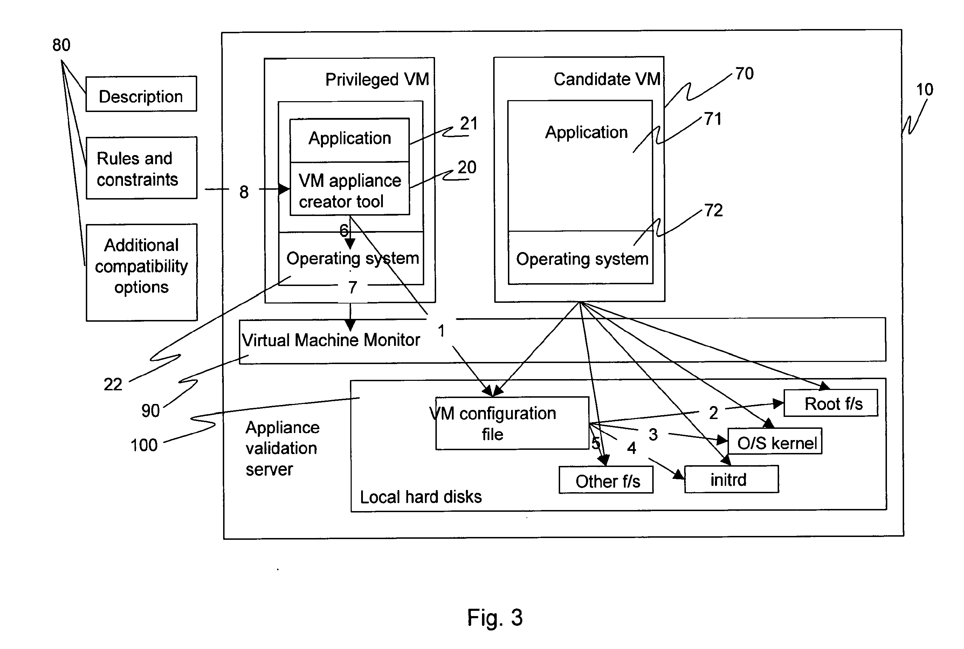

The user or administrator who wishes to create a VM appliance, called "the administrator" starts a virtual machine on the appliance validation server 10, using any available tools for doing so, for instance, the XenoServers software suite, or tools provided by Xen or VMWare. In this process the administrator defines configuration modules, for example a root file system, an operating system kernel which may reside inside the root file system, optionally an initial RAM disk (initrd) image, optionally other file systems and miscellaneous modules. An initrd image is an image of a temporary file system used during the boot process of the Linux kernel, typically to make preparations e.g. detect and load modules needed etc. so that the real root file system can be mounted. In addition, the administrator defines configuration parameters and initial resource allocation to be used by the virtual machine. The configuration parameters are stored within a VM configuration file, on a local storage 100 of the appliance validation server 10, as shown in Fig. 3. The same VM configuration file includes identifiers pointing to the location of configuration modules which are retrieved from a configuration set defining a candidate virtual machine as explained below. The configuration set is stored on the first server device.

A plurality of VM configuration files defining different virtual machine appliances may be created and stored on the local storage 100 in the same manner.

The administrator may fine-tune parameters of the VM such as available CPU, memory, disk, and network resources, or other configuration parameters even after the VM starts, in order to bring the running VM to a satisfactory level of robustness and performance.

It is to be noted that the administrator can create a plurality of VM appliances by starting a plurality of virtual machines as described above. In this case a plurality of VM configuration files are stored on the local disk 100.

It is worth noting that VM appliances are only used to start virtual machines. Once a VM is started from a VM appliance it can automatically upgrade all its software installations and packages from the Internet, using a tool such as "apt-get" or "yum" for Linux, or Windows Update for Windows. Thus VM appliances do not necessarily need to have the latest updates for all applications and packages they include. This allows optionally treating VM appliances as read-only; in this case VM appliances are never updated, and when a major update is needed, for instance a new Linux kernel, or a new version of one of the main applications inside the VM appliance a new, updated VM appliance is created. This provides important simplicity and ease of management, at the expense of requiring additional network traffic storage for updates of existing VM appliances.

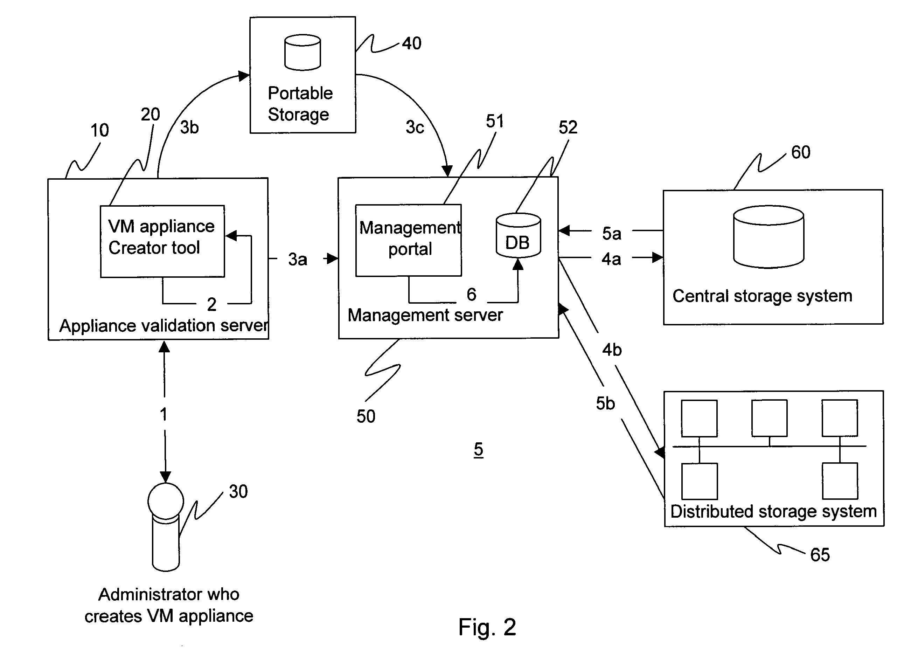

The administrator then runs the VM appliance creator tool 20 to create a VM appliance with respect to the running virtual machine, as shown in Figs. 2 and 3. The VM appliance creator tool 20 presents a graphical interface listing all virtual machines currently running on the validation server 10, and requesting a selection from the administrator as to which virtual machine is to be turned into a VM appliance. The administrator selects the VM to be turned into a VM appliance. This virtual machine will be hereafter referred to as *the candidate VM*. The selecting step is shown as operation 1 in Fig. 2. Fig. 2 differs from Fig. 5 insofar as the managed servers are not shown.
A portable storage 40 is shown in Fig. 2 which may be used to transfer VM appliances created on the appliance validation server 10 to the management server 50.

### Step 2: Discovery of configuration modules and parameters required to re-start a virtual machine

The main functionality of the VM appliance creator 20 is capturing and storing the configuration modules of the candidate VM and some system parameters, which are needed in order to turn the candidate virtual machine into an VM appliance such that the candidate virtual machine is able to be re-deployed or re-started on the appliance validation server 10 or at least on one of the managed servers 120₁ to 120ₙ. The configuration modules and parameters needed to re-start a virtual machine are termed as the required components and included in a configuration set of the candidate virtual machine. The process of discovering these required components is shown in Fig. 3. Fig. 3 shows in detail the appliance validation server 10. The appliance validation server 10 comprises a storage device 100, for example a plurality of local hard disks. Furthermore, a virtual machine monitor 90 runs on the appliance validation server 10 which serves to start a privileged virtual machine and its applications 21, the VM appliance creator tool 20 and the operating system as well as at least a candidate virtual machine 70 an its applications 71 and operating system 72.

Below we explain what the required components of the candidate VM are, and the mechanisms by which each of the required components is captured by the VM appliance creator 20 on the appliance validation server 10, for the given candidate VM 70. This step is schematically shown as operation 2 in Fig. 2. The required components are for example:

### 1. Configuration modules and parameters:

These modules and parameters are commonly retrieved by examining a file, called the VM configuration file, defining the configuration of the candidate VM. Such files are needed by most commonly used VMMs (virtual machine monitor) such as Xen and VMWare in order to start a virtual machine. It is to be noted that such a VMM is installed on the validation server 10 as well as each of the managed servers 120₁ to 120ₙ.

The VM configuration file is found by the VM appliance creator 20 on the local hard disks 100 of the appliance validation server 10 (see operation 1 in Fig. 3). The VM configuration file includes information about the following configuration modules such as:
a. **Root file system:** The file system that the VM appliance will use as its root. It is captured by reading the file system of the candidate VM on the validation server 10 from the local disk 100, e.g. the candidate VM's "/" in Linux or "C:\" in Windows. The exact location of the root file system can be found in the VM configuration file for the candidate VM, as schematically shown by operation 2 in Fig. 3.
b. **Operating system kernel:** This is the kernel of the operating system used by the VM appliance. It is captured by reading the operating system kernel used by the candidate VM on the validation server 10 from the local disk 100. The operating system kernel can often be found in the candidate VM's "/boot" in Linux or "C:\WINDOWS\system32\" in Windows. The VM appliance creator 20 locates the O/S kernel in step 3 in Fig. 3. The exact location of the operating system kernel can be found in the VM configuration file for the candidate VM 70.
c. **(Optional) Initial RAM disk (initrd) image:** This is an image of a temporary file system that may be used during the VM boot process. It is captured by reading the initial RAM disk image of the candidate VM on the validation server 10 from the local disk 100. The exact location of the initrd image can be found in the VM configuration file for the candidate VM. The VM appliance creator locates the initrd image in step 4 in Fig. 3. Note that if the initrd image is made available remotely over the tftp protocol from a tftp server it is not necessary that the VM appliance creator captures it. It can be accessed over the network whenever the VM appliance is deployed on managed servers 120₁ to 120ₙ.
d. **Other local file systems:** Other file systems are stored on the local disks 100 of the validation server 10, which applications 71 inside the candidate VM 70 use. They can be found in the VM configuration file for the candidate VM. The VM appliance creator 20 locates other file systems used by the candidate VM in step 5 in Fig. 3. It is noted that remote file systems used by the candidate VM's applications such as NFS-mounted file systems need not be captured by the VM appliance creator 20. They can be accessed over the data center system whenever the VM appliance is deployed on a managed server.

### 2. Configuration Parameters:

a. A parameter indicating, whether the candidate VM 70 is fully virtualized in software, e.g. common VMWare VMs, fully virtualized using hardware, e.g. Xen or VMware using Intel-VT or AMD-V, or paravirtualized, e.g. common Xen VMs).
b. A parameter indicating the amount of memory provided to the candidate VM 70 initially.
c. A descriptive name for the candidate VM.
d. The number of CPUs that the candidate VM is allowed to use.
e. A parameter indicating the initial network configuration of the candidate VM 70, including for example its IP address, default gateway, netmask, the virtual network interfaces the candidate VM has and their MAC (Ethernet) addresses. This parameter could also include the CPU "weight or priority that a given VM gets or other scheduling parameters.
f. Other parameters such as whether the virtual machine should automatically reboot if it crashes during its operation.

### 3. Extended configuration parameters:

There are several other candidate VM and system parameters that it is useful to capture when creating a VM appliance. The system parameters that the VM appliance creator discovers and captures are:
a. **Resource requirements:** The fine-tuning stage, where the administrator modifies the resources, e.g. CPU share, memory, network, given to the candidate VM 70 in order to bring it to a satisfactory level of robustness and performance, may alter the initial resource allocation parameters for the VM as defined in the VM configuration file. The VM appliance creator 20 discovers the current resource allocations, for instance by using interfaces provided by the VMM such as the "xm list" and "xm top" commands provided by the Xen management tools. The interfaces in turn communicate with the VMM in steps 6 and 7 as shown in Fig. 3.
b. **Compatibility options:** The candidate VM is running and has been validated on the appliance validation server 10 running a certain version of a given VMM. As a second example, a fully virtualized VM can only run on a managed server that has hardware virtualization capabilities. These are discovered by the "xm info" command provided by the Xen management tools and by other operating system information sources, such as the "/proc/cpuinfo" file) (see steps 6 and 7 in Fig. 3.
   It is also possible that the administrator adds in step 8 compatibility options manually. For example, the root file system used by the candidate VM 70 may be compatible not only with the operating system kernel defined in the candidate VM's configuration file, but also with other earlier or later kernels. Some of these options such as the type and version of the VMM used are discovered automatically by the VM appliance creator 20. Others such as the compatibility between kernels and root file systems, or the bit architecture of the VM (e.g. 32-bit or 64-bit) can be optionally added manually by the administrator as key-value pairs through the interface provided by the VM appliance creator 20.
c. **Rules and constraints:** There may be other, higher level constraints to be taken into account when deploying a VM appliance, which may be specified manually by the administrator in step 8. For instance, the managed server 120₁ on which the VM appliance is to be deployed must have at least 20GB of free disk space, e.g. because the applications in the VM tend to use a lot of temporary disk space.
d. **Description:** Description parameters are used to indicate the version of the distribution file system used, e.g. OpenSUSE 10.2 and a list of software packages and their versions that are installed and running within the candidate VM, e.g. Apache web server 2.2.4 or MySQL 5.0. This is supplied by the administrator in step 8. It may be a plain text list or a structured list based on one of the standard software description ontologies proposed, such as the Open Software Description (OSD) format (http://www.w3.org/TR/NOTE-OSD).

### Step 3: Creating and Storing or Uploading VM appliance descriptors

The VM appliance creator 20 automatically discovers at least one of the configuration modules and parameters as defined above and may receive in step 8 in Fig. 3 information of other rules and constraints entered by administrator, and generates a VM appliance descriptor 110. An exemplary format of a descriptor is shown in Fig. 4.

The VM appliance descriptor 110 comprises two parts: the first part 115 which includes the configuration modules and configuration parameters, and the second part 117 which includes the extended configuration parameters. The VM appliance creator 20 stores the components, discovered as described above in the two parts of the VM appliance descriptor 110.

The root file system, operating system kernel, initrd image, and other local file systems are not stored in their entirety within the VM appliance descriptor 110, as this would make the object very large, impractical to handle and copy, and difficult to store in a searchable and indexing-capable medium such as a database). Instead, the VM appliance descriptor 110 stores *pointers* to the root file system, O/S kernel, initrd image, and other local file systems, as described below.

Before finalizing the VM appliance creator 20, the VM appliance creator 20 shuts down the candidate VM 70 to ensure consistency of the file system contents to be submitted to the management portal 51 of the management server 50.

It should be noted that the file systems used by the candidate VM 70 can be either stored in *images*, such as ISO images, or in logical or physical partitions of the local disks 100. For the file systems, i. e. the configuration modules to be submitted to the management portal 51, the VM appliance creator 20 needs to ensure that they are all stored in images. Thus, if some of the candidate VM's file systems are stored in physical or logical partitions of the local disks 100, the VM appliance creator 20 first creates corresponding *file system images* containing the entire root file system and e.g. other local file systems of the candidate VM, using for example the dd command of Linux. The pointers point to these image files.

Next, the VM appliance descriptor 110, the discovered file system images of root f/s, initrd, other local file systems, the operating system kernel and configuration parameters are transferred to the management portal 51 of the management server 50 directly from the appliance validation server 10 via a connection to the management server 50, as shown in step 3a of Fig. 2 or via a locally accessible storage device such as the portable storage device 40, as indicated by steps 3b and 3c in Fig. 2.

When the file system images containing the root file system, initrd, other local file systems and the operating system kernel reach the management portal 51, they will be sent from the management server 50 either to the central storage system 60, step 4a or to the distributed storage system in step 4b such as HDFS (http://lucene.apache.org/hadoop/hdfs design.html) and stored therein. The locations where the file system images and the operation system kernel of the VM appliance are stored are returned to the management portal 51 of the management server 50 as Unique Resource Identifiers (URIs), as indicated by steps 5a and 5b. The pointers of the VM appliance descriptor 110 are correspondingly updated to point to the newly generated URIs. Then, the VM appliance descriptor 110 is stored the local database 52 of the management server 50 in step 6. The updated pointers are schematically depicted in Fig. 4 by arrows.

At this point the VM appliance is registered as available in the management portal 51, and is ready to be deployed on the managed servers 120₁ to 120ₙ on demand by a user.

The data center system 5 can also be used to create and deploy VM appliances that use Copy-on-Write-based techniques, such as but not limited to those for rapid global-scale deployment described by Evangelos Kotsovinos et al. in "Global-scale service deployment in the XenoServer platform, In Proceedings of the First Workshop on Real, Large Distributed Systems (WORLDS '04). This system uses Copy-on-Write (CoW) to allow the separation of an immutable *template* file system, which is persistently cached on the managed servers, from the mutable user data (or customizations), which are stored remotely in a central storage system. In this case the pointer of the file system that uses CoW (e.g. root f/s or other local file system) in the VM appliance descriptor stores the URI of the file system that contains the customizations. Inside that file system there is a special file that contains a second pointer to the template file system that the overlay customizes, which is read by the CoW server used as described in the cited document.

The deployment of a VM appliance is initiated by a user who may be the same as the one who created the VM appliance, or a different one. We will term the party who wishes to deploy an available VM appliance to one or more managed servers 120₁ to 120ₙ *the user*. We refer to Fig. 5 to describe the process of deploying a VM appliance.

It is assumed that a VM appliance should be deployed on the managed server 120₁.

The management portal 51 of the management server 50 stores a number of VM appliance descriptors in the locally available database 52, as explained in the previous section. Firstly, the user's device 30 is connected, for example via the Internet with the management server 50. In one implementation the device 30 provides a World Wide Web based interface, using a servlet that runs on an application server such as Tomcat. This allows the user's device to be connect to the management portal 51 using a standard web browser, such as Internet Explorer or Mozilla Firefox, as indicated in Fig. 5 by step number "1". In other implementations the interface of the device 30 can be a Java programmatic API, an open XML-RPC interface, or a local command line interface. The management portal 51 makes then the VM appliance descriptors 110 available to the authenticated user over the Internet.

The user sees a list of available VM appliance descriptors and appliance categories for instance, "vanilla Linux", "Web servers", "Application servers", "Customer Relationship Management", etc.. The user can choose to *browse* through the tree of available VM appliance descriptors until a suitable VM appliance descriptor is found, or to use the available *search* function to look for a VM appliance descriptor with certain keywords in its description, or with certain characteristics or properties e.g. a VM appliance which can run in fully-virtualized mode, requires less than 200MB of memory, etc.. At the end of this process the user selects on the device 30 the VM appliance descriptor of the VM appliance that is to be deployed, as well as the server 120₁ on which the selected VM appliance is to be deployed. The process by which available servers are discovered and monitored is not to be covered by this document, and has been described by Evangelos Kotsovinos in "Global public computing" PhD dissertation, available as Cambridge University Computer Laboratory Technical Report UCAM-CL-TR-615, ISSN 1476-2986.

The user may also wish to undertake certain customizations or adaptations of the selected VM appliance descriptor. This is supported for example by the web-based interface of the device 30 that the management portal 51 exports. For instance, if the VM appliance descriptor defines that the virtual machine will use DHCP for its network configuration, and the user wishes that the IP address and network configuration is to be statically configured (instead of using DHCP), it will have to be changed before the VM appliance can be deployed on the server 120₁. Such customizations can be stored back to the database 52 of the management server 50 for later access as customized versions of the VM appliance. VM appliances can further be cloned for allowing multiple users to have customized copies of an appliance.

It is worth noting that a suitably configured VM appliance, e.g. one that does not include a server-specific state in it but gets automatically configured in the environment in which it is started, for instance using DHCP, can be deployed on the server 120₁ with a minimum of one click by the user on the management portal's web site or an other interface.

For security and license protection, it is necessary that downloads of VM appliances are strictly authorized by the management portal 51, based on the authentication and authorization decision about the user in question. At the same time, it is desirable to a) maintain simplicity in the storage system 60 or 65 by not requiring that it has the necessary intelligence to maintain user accounts and authentication credentials for every user, and b) ensure that transfers of large amounts of data e.g. the root file system and O/S kernel of the VM appliance are performed directly between the storage system 60 or 65 and the management daemon 12 of the managed servers 120₁ to 120ₙ, without having to pass the data stored on the storage system 60 or 65 through the central management portal 51. This is desired for performance and scalability.

For the above reasons, an effective and a lightweight ticketing mechanism is implemented that works as follows. After the user has selected the VM appliance and the managed server 120₁ on which the VM appliance is to be deployed, the management portal 51 generates a long, random, unguessable number associated with the selected VM appliance. The random number is called the ticket and is deleted or expires after a single use, e.g. after the VM appliance has been started successfully on the managed server 120₁. The ticket may be securely sent from the management server 50 over an encrypted secure sockets layer (SSL) connection to the storage system 60 or 65 as indicated in Fig. 5 by arrow 2 and to the management daemon 122 of the selected server 120₁ on which the VM appliance is to be started, as indicated in Fig. 5 by arrow 3.

The management portal 51 also sends a request to the management daemon 122 of the managed server 120₁ to download and start the chosen VM appliance, as well as the selected VM appliance descriptor 110 associated with the VM appliance to be deployed on the managed server 120₁. The VM appliance descriptor contains, as discussed earlier, pointers to the location of the configuration parameters and file system images (containing the root f/s, initrd, other local file systems and the O/S kernel), which define the configuration of the selected VM appliance. The management daemon 122 of the managed server 120₁ transfers the ticket and the VM appliance descriptor 110 to the storage system 60 and/or 65 where these data are located, as shown in Fig. 5 by arrow 4. The storage system 60 and/or 65 then compares the tickets received from the management portal 51 of the management server 50 and from the VM management daemon 122 of the managed server 120₁. If the tickets are identical the storage systems 60 and/or 65 send in response to the VM appliance descriptor the stored configuration parameters, the file system images and the operating system kernel requested to the management daemon 122 of the managed server 120₁ over a secure encrypted SSL connection, as indicated in Fig. 5 by arrow 5.

Once the configuration parameters and the file system images (containing the root f/s, initrd, other local file systems and the O/S kernel) have been received by the management daemon 122 on the managed server 120₁, the VM appliance is ready to start the corresponding virtual machine. The management daemon 122 communicates with the underlying VMM, e.g. Xen or VMWare (not shown), to request the creation of the virtual machine with the configuration described in the selected VM appliance descriptor, as indicated in Fig. 5 by arrow 6.

The VM starts on the managed server 120₁ using the operating system kernel, the root file system, initrd, and other local file systems defined in the VM appliance descriptor and downloaded from the storage system 60 and/or 65. After the new virtual machine has been booted successfully on the managed server 120₁, the management daemon 122 sends an acknowledgement message confirming the successful completion of the operation to the management portal 51 of the management server 50, as indicated in Fig. 5 by arrow 7, which in turn sends a respective acknowledgement message to the user's device 30 to notify the user thereof, as indicated in Fig. 5 by arrow 8. At this point the new VM, created from the VM appliance downloaded from the storage system 60 and/or 65, is fully operational on the managed server 120₁. The user can now access the services the virtual machine provides. For example, if the VM provides a Web server the user can connect to it using a browser. He or she can further be connected to the VM's desktop remotely using Virtual Network Computing (VNC).

Often in data center environments there are scripts for customizing applications in bulk across different servers, or for automatically customizing a deployed application on a server. For instance, there may be a script that updates the configuration files and user accounts of a CRM application installed on a server based on a central configuration stored in a configuration database, such as CMDB. A further capability of our system is allowing the execution of scripts, provided by authenticated administrators, at various points of the VM appliance deployment process.

VM appliances as described above bring significant benefits to the provisioning of the virtualized data center system 5. Using VM appliances, allows starting, for instance, new web servers on multiple data center servers, such servers 120₁ to 120ₙ in parallel in a few seconds. This process could take up to one or two days if done manually. Therefore, using VM appliances the complexity and labor costs of provisioning can be reduced. Furthermore, robustness and reliability can be increased, as virtual machines are tested and validated before the respective VM appliances are created, ensuring that when deployed they will function reliably.

Applications that can be deployed in a data center system using VM appliances may include operating systems such as Linux and Microsoft Windows. It may further include network server software - for instance web servers such as Apache or Microsoft IIS, or application servers such as Apache Tomcat or BEA Weblogic, Red Hat JBoss, IBM WebSphere, or streaming servers such as Darwin Streaming Server or QuickTime Streaming Server or Icecast. It may further include database-centric applications such as solutions provided by SAP or Oracle. It may further include standalone server-side applications.

## Claims

1. A method for providing virtual machine appliances for at least one virtualized server device (120₁ to 120ₙ) to boot a virtual machine thereon, the method comprising the steps of:
a) storing on a first server device (10) at least one configuration set, each comprising a plurality of configuration modules and, if available, parameters which define at least partially the configuration of a separate virtual machine;
b) selecting a virtual machine running on the first server device (10) intended to be converted into a virtual machine appliance so that the selected virtual machine can be restarted on a selectable virtualized server device (120₁ to 120ₙ);
c) retrieving from the stored configuration set associated with the selected virtual machine at least some configuration modules needed to start the selected virtual machine, the retrieved configuration modules defining a virtual machine appliance;
d) transferring the retrieved configuration modules to a storage means (60, 65);
e) storing the retrieved configuration modules in the storage means (60, 65);
f) transferring location addresses from the storage means (60, 65) to a second server device (50), wherein the location addresses indicate the locations where the retrieved configuration modules are stored; and
g) generating pointers in response to the location addresses and storing them on the second server (50) such that the configuration modules can be identified and downloaded to a virtualized server device (120₁ to 120ₙ) on demand.

2. The method according to claim 1,
wherein the retrieved configuration modules include a root file system, a configuration file system and an operating system kernel.

3. The method according to claim 1 or 2, wherein
step c) comprises the step of retrieving at least some of the configuration parameters, transferring the retrieved configuration parameters to the second server device (50) and storing them on the second server device (50).

4. The method according to claim 1 or 2, wherein
step c) comprises the step of retrieving at least some of the configuration parameters,
step d) comprises the steps of transferring the retrieved configuration modules and the configuration parameters to the second server device (50) and the the retrieved configuration parameters to the storage means (60, 65);
step f) comprises the step of transferring location addresses where the retrieved configuration parameters are stored from the storage means (60, 65) to the second server device (50), and
step g) comprises the step of generating pointers in response to the location addresses and storing them on the second server (50) such that the configuration parameters can be identified and downloaded to the virtualized server device (120₁ to 120ₙ) on demand.

5. The method according to claim 3 or 4, wherein the configuration parameters of each virtual machine which is available on the first server device (10) include initial resource allocation parameters and/or initial network configuration parameters, which may be altered automatically and/or manually.

6. The method according to any one of the preceding claims,
wherein the retrieved configuration modules are converted into images which are stored in the storage means (60, 65).

7. The method according to any one of the claims 4 to 6,
wherein
- the pointers are created at the first server device (10), each pointer represents a respective configuration module of the retrieved configuration modules and the configuration parameters of the configuration set,
- the pointers are transferred to the second server device (50), and
- step g) comprises the step of updating the pointers in response to the location addresses received from the storage means (60, 65) and storing the updated pointers on the second server (50).

8. The method according to claim 7, wherein the pointers are defined by a descriptor object (110) which is stored in a local database (52) of the second server device (50), and wherein each descriptor object represents a virtual machine appliance and points to the configuration modules stored on the storage means (60, 65).

9. The method according to any one of the claims 3, 5 and 6,
wherein the pointers are created at the first server device (10), each pointer represents a respective configuration module of the retrieved configuration modules of the configuration set,
- the pointers are transferred to the second server device (50), and
- step g) comprises the step of updating the pointers in response to the location addresses received from the storage means (60, 65) and storing the updated pointers on the second server (50), wherein the pointers and the configuration parameter are defined by a descriptor object (110) which is stored in a local database (52) of the second server device (50), and wherein each descriptor object points to a virtual machine appliance stored on the storage means (60, 65).

10. The method according to claim 8 or 9, further comprising the steps of:
- establishing a connection between a user's device (30) and the second server device (50);
- providing a list of all available virtual machine appliances stored on the storage means (60, 65) to the user's device (30);
- selecting a virtual machine appliance and a virtualized server device (120₁ to 120ₙ) on which the selected virtual machine appliance is to be deployed;
- generating a ticket associated with the selected virtual machine appliance;
- transferring the ticket to the selected virtualized server device (120₁ to 120ₙ) and to the storage means (60, 65);
- transferring the descriptor object associated with the selected virtual machine appliance from the second server device (50) to the selected server device (120₁ to 120ₙ);
- transferring the descriptor object and the ticket from the selected server device (120₁ to 120ₙ) to the storage means (60, 65);
- in response to the descriptor object and the ticket sending the configuration modules and, if available, the configuration parameters, which define the selected virtual machine appliance from the storage means to the selected server device (120₁ to 120ₙ);
- booting the respective virtual machine on the selected server device (120₁ to 120ₙ) by using the configuration modules of the selected virtual machine appliance received from the storage means (60, 65) and by using the configuration parameters of the selected virtual machine appliance received from the storage means (60, 65) or the second server device (50).

11. The method according to claim 10,
wherein an acknowledgement message is transferred from the selected server device (120₁ to 120ₙ) to the second server device (50) when the virtual machine has been booted successfully.

12. The method of claim 11,
wherein the ticket is deleted and an acknowledgement message is sent to the user's device (30).

13. The method according to any one of the preceding claims, wherein step b) comprises the steps of starting, testing and validating the selected virtual machine.

14. The method according to any one of the preceding claims, wherein steps b) to g) are repeated with respect to each virtual machine available on the first server device (10).

15. A data center system (5) for providing virtual machine appliances for at least one virtualized server device (120₁ to 120ₙ) to boot a virtual machine thereon, comprising
a) a first server device (10) which is adapted to run a virtual machine and to execute applications within the virtual machine, wherein the first server device (10) comprises
- storage means for storing at least one configuration set, each comprising a plurality of configuration modules and, if available, configuration parameters, which define at least partially the configuration of a virtual machine,
- means (20) for retrieving from the stored configuration set at least some configuration modules and, if available, at least one configuration parameter needed to start the respective virtual machine, the retrieved configuration modules and the retrieved at least one configuration parameter defining a virtual machine appliance;
b) a storage device (60, 65) for storing the retrieved configuration modules; and
c) a second server device (50), which comprises storage means (52) for storing pointers pointing to the locations where the retrieved configuration modules are stored on the storage device (60, 65),
wherein the second server device (50) is adapted to transfer the configuration modules received from the first server device (10) to the storage device (60, 65),
wherein the at least one configuration parameter is stored on the storage device (60, 65) or on the second server device (50).

16. The data center system according to claim 15, wherein the storage means (52) of the second server device (50) stores pointers pointing to the locations where the at least one configuration parameter is stored on the storage device (60, 65), wherein the second device (50) is adapted to transfer the at least one configuration parameter received from the first server device (10) to the storage device (60, 65).

17. The data center system according to claim 15 or 16,
wherein the storage device is a central storage system (60) and/or a distributed storage system (65), which is adapted to communicate with the second server device (50, 51) to receive the configuration modules and/or the at least one configuration parameter and to send their location addresses to the second server device (50, 51).

18. The data center system according to claim 15, 16 or 17, further comprising
at least one virtualized server device (120₁ to 120ₙ) on which a selected virtual machine appliance is to be deployed, the virtualized server device (120₁ to 120ₙ) being adapted to run a virtual machine monitor, a user's device (30) which is adapted to establish a connection to the second server device (50) in response to a user's request, the user's device (30 having input means for selecting a virtual machine appliance and at least the one virtualized server device (120₁ to 120ₙ) on which the selected virtual machine appliance is to be deployed,
wherein the second server device (50) includes second storage means (52) for storing a list of all available virtual machine appliances stored on the storage device (60, 65), generating means (51) for generating a ticket in response to the selected virtual machine appliance, means for transferring the list to the user's device(30), the ticket to the selected virtualized server device (120₁ to 120ₙ) as well as to the storage device (60, 65) and a descriptor object associated with the selected virtual machine appliance to the selected virtualized server device (120₁ to 120ₙ) via established connections, wherein the descriptor includes the pointers to the configuration modules and to the at least one configuration parameter, if stored on the storage device (60, 65), or the at least one configuration parameter if they are stored on the second server device (50) as well as the pointers to the configuration modules;
wherein the selected virtualized server device (120₁ to 120ₙ) is adapted to transfer the pointers and the ticket to the storage device (60, 65);
wherein the storage device (60, 65) comprises means for comparing the tickets received from the second server device (50) and the virtualized server device (120₁ to 120ₙ) and means for sending the configuration modules and, if available, the at least one configuration parameter, which define the selected virtual machine appliance to the selected virtualized server device (120₁ to 120ₙ), in response to the pointers and the tickets;
wherein the selected virtualized server device (120₁ to 120ₙ) is adapted to boot the respective virtual machine by using the configuration modules and, if available, the at least one configuration parameter which define the selected virtual machine appliance.

19. The data center system according to claim 18,
wherein the ticket is a random number which is deleted by the second sever device (50) after the virtual machine has been booted successfully.

20. The data center system according to any one of the claims 15 to 19,
wherein the generating means (51) for generating a ticket and the transferring means are implemented on the second device (50).

21. The data center system according to any one of the claims 15 to 20,
wherein the second server device (50) includes means for searching through the available virtual machine appliances using predetermined identifiers and/or parameters and means for categorizing virtual machine appliances.
